# EUROPEAN PATENT SPECIFICATION

(11) **EP 0 547 330 B1**
(45) Date of publication and mention of the grant of the patent: **17.09.1997**
(21) Application number: 92117817.4
(22) Date of filing: 19.10.1992
(51) Int. Cl.: B29C 70/02, B29C 53/80, B29B 15/12

(54) **Method for manufacturing product made of fiber-reinforced resin and product manufactured by method**
Verfahren zur Herstellung von einem Gegenstand aus mit Fasern verstärktem Harz und so hergestelltem Gegenstand
Procédé pour la fabrication d'un objet en résine renforcée par des fibres et objet obtenu

(30) Priority: 19.10.1991 JP 271566/91; 19.10.1991 JP 271570/91; 04.09.1992 JP 237027/92
(43) Date of publication of application: 23.06.1993
(73) Proprietor: SUMITOMO RUBBER INDUSTRIES LIMITED, Kobe-shi Hyogo-ken (JP)
(72) Inventor: Fujita, Kazumi, Kobe-shi, Hyogo-ken (JP); Yamaguchi, Tetsuo, Nishinomiya-shi, Hyogo-ken (JP)
(74) Representative: Glawe, Delfs, Moll & Partner

(56) References cited:
- EP-A- 0 338 115
- EP-A- 0 444 819
- DE-A- 2 937 377
- GB-A- 2 208 364
- GB-A- 2 212 436
- US-A- 3 975 479
- US-A- 4 746 386

## Description

### Field of the Invention

The present invention relates to a method for manufacturing a product made of fiber-reinforced resin and a product manufactured by the method and more particularly to a method for manufacturing a product made of fiber-reinforced resin by reaction injection molding, with fibers preformed by filament winding method (FW method) serving as a reinforcing fiber and resin such as RIM nylon or cyclopentadiene acting as matrix resin and in particular, to a method for obtaining a product made of fiber-reinforced resin in a curved pipe-configuration which is difficult for the conventional method to form.

### Description of the Related Arts

In manufacturing a product made of fiber-reinforced resin with fibers preformed by filament winding method acting as a reinforcing fiber, the fibers impregnated with unhardened resin are continuously supplied to a rotating mandrel moving axially so as to uniformly wind the fibers around the entire peripheral surface of the mandrel. The resin is hardened under condition that the fibers are wound around the mandrel, then a product made of fiber-reinforced resin is taken out from the mandrel.

According to the above-described conventional method, the configuration of the mandrel conforms to that of a product to be molded. For example, if the product is to be shaped in a curved configuration, it is necessary that the mandrel is curved. When fibers are wound around the curved mandrel, the axis of the curved portion of the mandrel and the rotational axis of the straight portion thereof do not coincide with each other, unlike the case in which they are wound around a cylindrical pipe (mandrel) symmetrical with respect to its axis. Thus, a method of winding fibers around the curved mandrel is very complicate and difficult.

In order to wind fibers around the curved mandrel appropriately, proposals have been made, for example, in Japanese Patent Publication No. 1-168432 through 168436. According to the proposals, the operation of a filament winding machine is controlled by a computer, based on numerical data obtained by calculating the positions of the fibers to be wound on the curved mandrel.

The above method necessitates the provision of a large computer and a filament winding machine having a complicated mechanism for interlocking the mandrel and an eye with each other. The eye is a means, disposed between a plurality of rolls wound by the fiber and the mandrel, for inserting a plurality of fibers into an opening and regulating the travel direction of the fibers and collecting them into one fiber.

Moreover, even though the fibers are uniformly wound around the peripheral surface of the curved mandrel, it is difficult to take out from the mandrel a curved product in which the resin has been hardened. Depending on a configuration of a product, it cannot be taken out from the mandrel.

According to the method of impregnating fibers with resin before the fibers are wound around the mandrel, resin such as RIM nylon or cyclopentadiene cannot be used as matrix resin in reaction injection molding.

Nomally, a binder is used to process of fibers in the texitile industry. The binder consists of epoxy or polyester which hinders the polymerization of an unreacted monomer to be used in reaction injection molding.

That is, a compound which hinders the polymerization of the unreacted monomer reacts with a catalyzer to deprive it of its activity. Supposing that the unreacted monomer is RIM nylon the polymerization thereof is hindered by the following compounds:
1. compounds having the following active hydrogen:
   * compounds such as water or alcohol having hydroxyl group
   * compounds having amino group
   * compounds containing carboxyl group (acid anhydride group)
2. halide and aliphatic compound added-halide in particular
3. compounds inferior in alkali resistance property, for example, polyester, polycarbonate, polyurethane or the like. These compounds form active hydrogen through decomposition

Epoxy and polyester which have been conventionally used as the binder correspond to the above 1. or 3.

As described above, most of the binders cannot be used to bind the reinforcing fibers to be used in performing reaction injection molding method. That is, it is very difficult to obtain a product made of fiber-reinforced resin through reaction injection molding method which is carried out by using a mold in which the reinforcing fibers preformed by filament winding method is set and RIM resin is injected.

However, filament winding method has an appropriate control over the reinforcing fibers. That is, a desired plural kind of fiber can be used and fibers can be wound around the mandrel in a desired quantity and at a desired angle.

In addition, since resin which has pregnated the reinforcing fibers is not hardened when they are on the mandrel, they are wound around a straight mandrel and then, can be shaped into a curved configuration or other configurations.

Accordingly, there is a strong demand for obtaining a molded product made of fiber-reinforced resin by setting reinforcing fibers preformed by filament winding method in a mold so as to carry out reaction injection molding by injecting various unreacted solution of RIM resins such as RIM nylon into the mold.

As described above, it has been very difficult to obtain a product made of fiber-reinforced resin through reaction injection molding method which is carried out by using a mold in which the reinforcing fibers preformed by filament winding method is set and unreacted solution of RIM resin is injected. Therefore, braided fiber, cloth or tape is used as the reinforcing fiber of the fiber-reinforced resin comprising matrix resin which is used in reaction injection molding method.

In order to obtain a reinforcing fiber consisting of a plural kind of fiber, a plural kind of braided fiber, cloth or tape are are laminated one on the other.

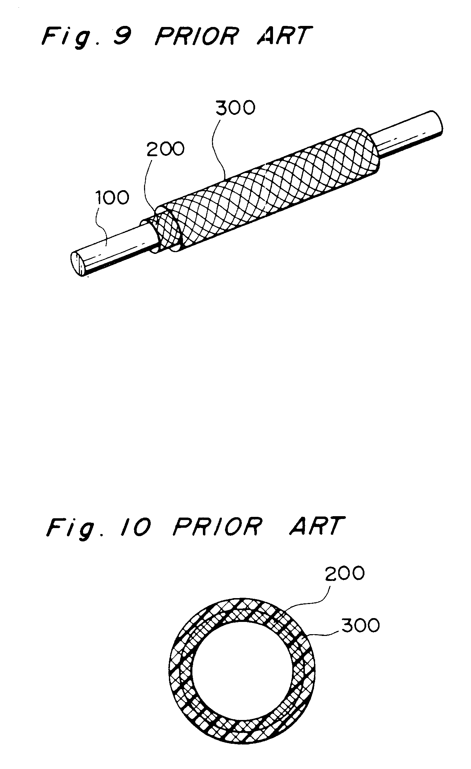

That is, as shown in Fig. 9, a braid 2 of kind (A) is wound around a mandrel 1 and then, a braid 3 of kind (B) is wound around the braid 2. Then, a reinforcing fiber shaped by laminating the braid 3 on the braid 2 is taken out from the mandrel, then, set in the cavity of a mold. Then, unreacted solution of RIM nylon or cyclopentadiene is injected into the cavity to obtain fiber-reinforced resin through reaction injection molding method.

However, in shaping the reinforcing fiber by laminating different kind of braided fibers one on the other, the mixing ratio between them is controlled only on the basis of the amount of fiber per length or the number of layers of each braid. Therefore, the rigidity, elastic modulus, shock resistance performance, weight, thickness, vibration absorbing performance and other functions of a product are designed in a small range.

In addition, in laminating a plural kind of braided fibers from an inner layer to an outer layer to form a reinforcing fiber, if a fiber 3 having a small strength is disposed in an outer layer in consideration of smoothness, the strength of the outer layer is small. That is, the reinforcing fiber is different in strength depending on a layer. Accordingly, it is difficult to give a uniform strength from inner side to outer side of the reinforcing fiber and allow the reinforcing fiber to have both smoothness and a high strength in its outer side. Accordingly, there is a strong demand for the development of a method for manufacturing a product made of fiber-reinforced resin comprising a plurality of fibers and having favorable functions.

GB-A-2 212 436 discloses a method of making a fiber-reinforced racquet frame, which comprises weaving at least one layer of braided reinforcing fibers around an extruded polyethylene foam core member to form a fiber-reinforced core. The core is placed in a mould having a cavity shaped to define the frame, and a methacrylate based resin, which has a relatively low setting temperature and viscosity, is injected into the mould around the core. Because of its low viscosity, the resin readily impregnates the fibers of the core, and produces a racquet frame requiring little or no surface finishing.

This racquet frame has the drawback that a layer of braided reinforcing fibers is used. The matrix resin will not penetrate smoothly into such a woven layer of braided reinforcing fibers.

On the other hand GB-A-2 208 364 discloses a process for preparing a fiber reinforced plastic article by a reaction injection molding method, comprising the following steps;
a) winding reinforcing fiber around a flexible tube,
b) placing it in a mold,
c) either pouring a foaming agent in said flexible tube followed by foaming and curing it, or pouring an uncured foam followed by curing it, and
d) injecting a reaction-injection-molding composition between said mold and said flexible tube to cure.
The article may be a shaft of a golf club or a frame of a tennis raquet.

The process of this document has a drawback, that the foaming agent remains in the core of the product provided by the above process.

### SUMMARY OF THE INVENTION

It is an object of the present invention to provide a product made of fiber-reinforced resin comprising reinforcing fibers shaped by filament winding method and matrix resin such as RIM nylon or cyclopentadiene which impregnates the reinforcing fibers.

It is another object of the present invention to provide a product made of fiber-reinforced resin in a curved configuration or other configurations by using fibers shaped by filament winding method as a reinforcing fiber.

It is still another object of the present invention to solve problems of a conventional method which occur in laminating a plural kind of braided fibers one on the other and control the mixing ratio between a plural kind of fibers at a desired ratio and allow a reinforcing fiber to have a uniform function through an inner side thereof to an outer side thereof.

The above object is achieved by a method for manufacturing a product made of fiber reinforced resin according to claim 1. The dependent claims are related to further advantageous aspects of the present invention.

Preferably, the tube or the solid body serving as the core of the product is flexible. A plural kind of fibers is wound around the flexible solid body or the flexible tube and then, the tube removed from the mandrel or the solid body is shaped into a configuration, for example, a curved configuration in accordance with the configuration of the cavity. Thereafter, the preformed fibers with the core comprising of the tube or solid body are set in the cavity of the mold, and the tube is filled with pressure gas. Then, unreacted solution of resin is injected into the cavity of the mold to allow a polymerization reaction therein. Thus, a product made of fiber-reinforced resin and having the predetermined configuration can be obtained.

The fibers are immersed in liquid containing water, an organic solvent or a mixture thereof before the fibers are wound around the core by filament winding method. Due to the immersion of the fibers in the liquid, the friction between the fibers unrolled from rolls is reduced at an eye and thus they are not frayed while they are passing through the eye and in addition, binding force is generated among the fibers while they are being wound around the core because they are wet. Thus, they can be prevented from being untied. Therefore, the fibers can be set in the mold with the orientation of the fibers kept as designed.

The organic solvent is selected from among methanol, carbon tetrachloride, chloroform, hexane, cyclohexane, benzene, toluene, 1, 2-dichloroethane, ethanol, isopropanol, tetrahydrofuran, 1, 4-dioxane, acetone, methyl ethyl ketone and diethyl ether.

The immersing liquid consisting of water or an organic solvent or a mixture thereof evaporates and thus does not remain on the fibers during reaction injection molding. Accordingly, there is no possibility that the immersing liquid deteriorates the activity of a polymerizing catalyzer during reaction injection molding and that it hinders polymerization reaction.

Preferably, instead of the immersing liquid, the fibers are immersed in water or alcohol solution containing water-soluble nylon, alcohol-soluble nylon or water/alcohol-soluble nylon before the fibers are wound around the core. The soluble nylon acts as a binder and thus prevents the fibers from being untied while they are being wound around the core and in addition, makes it easy to bend them kept on the core even after the liquid is dried.

Most favorably, the fibers drawn out from a roll is immersed in the immersing liquid containing water-soluble or alcohol-soluble nylon before they are wound around the core via an eye.

Since nylon remains on the fibers even after the immersing liquid evaporates and binds the fibers with each other, it prevents the fibers from being untied after they are wound around the core.

Water, methanol, ethanol or a mixture thereof is suitable for containing the soluble nylon. AQ nylon manufactured by Toray Co., Ltd. and Torejin manufactured by Teikoku Chemical Industry are commercially available as the soluble nylon.

A product made of fiber-reinforced resin according to the present invention comprises fibers consisting of two or more kinds of fibers in the form of roving, tape, yarn, monofilament or cloth preformed by winding them around a core by filament winding method; and matrix resin which impregnates the preformed fibers by reaction injection molding method.

Further, a method for manufacturing product mad of fiber-reinforced resin according to the present invention comprise follow steps of;
winding reinforcing fibers such as roving, tape, yarn, monofilament or cloth around a core to preform said fibers by filament winding method;
setting said core and said prefomed fibers integral with each other in a cavity of a mold;
injecting an unreacted solution of resin serving as matrix resin into said cavity; and
carring out reaction injection molding.

A plural kind of fibers may be simultaneously unrolled from each fiber roving and wound around the core by supplying them to the core via the eye with the fibers being stranded. It is possible to feed out a kind of fiber from a roving and subsequently a different kind of fiber from another roving. In order to dispose a plural kind of fibers in the same layer, a fiber to be wound later is disposed between a fiber previously wound, by selecting an appropriate winding angle. Further, a plurality of rovings each consisting of a mixture of a plural kind of yarns is preferably used so that the reinforcing fiber consisting thereof has a plurality of functions.

Carbon fiber, glass fiber, aramide fiber, silicon carbide fiber, steel fiber, amorphous metal fiber, organic fiber; and/or a mixture thereof can be preferably used as the continuous reinforcing fiber to be preformed by filament winding method.

RIM nylon, cyclopentadiene, epoxy, urethane or polyester can be used in the reaction injection molding or resin transfer molding, and unreacted solution of RIM nylon, cyclopentadiene and so on is injected into the cavity of the mold.

When RIM nylon is used in the reaction injection molding or resin transfer molding, monomer casting method is adopted. That is, melted lactam class containing a polymerizing catalyzer and polymerization initiator is injected into a mold. Then, the mold is heated so that polyamide polymerization occurs.

As ω-lactam class which is a monomer, the following is preferably used: α-pyrolidone, α-piperidone, ω-enantholactam, ε-caprolaotam, ω-caprylolactam, ω-pelargonolactam, ω-decanolactam, ω-undecanolactam, ω-laurolactam or c-alkyl substitution-ω-lactam of these substances and a mixture consisting of more one ω-lactam. The ω-lactam is capable of containing a modifier (soft component) as necessary. The soft component has a function group which reacts with an initiator in molecules thereof and is a compound low in Tg. Polyether or liquid polybutadiene having a normal functional group is used as the soft component.

UBE nylon (UX-21) manufactured by Ube Kosan Co., Ltd. is commercially available as the material to be used as ω-lactam. The UBE nylon (UX-21) comprises an A-component consisting of an alkali catalyzer and caprolactam and a B-component consisting of caprolactam and prepolymer containing the soft component.

As the polymerization catalyzer, sodium hydride is preferably used. In addition, known polymerization catalyzers of ω-lactam such as sodium, potassium, lithium hydride may be used. Preferably, the polymerization catalyzer is added to ω-lactam in the range from 0.1 to 0.5 mole%.

N-acetyl-ε-caprolactam is normally used as the polymerization initiator (activator.) In addition, the following substances may be used: triallyl isocyanurate, derivative of N-substituted ethyleneimine, 1.1'-carbonylbisaziridine, derivative of oxazoline, 2-(N-phenylbenzimidoyl) acetanilide, 2-N-morpholino-cyclohexene-1.3-decarboxyanilide, known isocyanate, and carbodiimide.

Preferably, the polymerization initiator is added to ω-lactam in the range from 0.05 to 1.0 mole%.

When cyclopentadiene resin is used as the matrix resin, the following substances are used as polymerizing monomer: dicyclopentadiene, dihydrodicyclopentadiene, tricyclopentadiene, tetracyclopentadiene, cyclopentadiene-methylcyclopentadiene co-bipolymer.

As the polymerization catalyzer, halide, oxyhalide, oxide of tungsten, molybdenum, tantalum or etc.: or organic ammonium tungstenate salt are preferably used.

As the polymerization initiator, organic metal compounds mainly alkylates or alkylate of [I]-[III) group in periodic table such as tetraalkyltin, trialkyltin hydride, alkyl alminium, alkyl alminium halide are preferably used.

Since a solution containing the polymerization catalyzer and the polymerization activator (polymerization initiator) starts a polymerization reaction rapidly, hardening may occur before the solution flows into the mold in a sufficient amount. Therefore, monoether and/or monoester of a glycol compound selected from alkylene glycol or polyalkylene glycol are preferably used as activation-adjusting agent.

In injecting the solution into the mold, it is preferable that the temperature of the mold is 40 to 130°C and a polymerization reaction is allowed to continue for one to five minutes.

The core can be shaped in any desired configurations provided that fibers can be wound around it. A solid body consisting of a plate, a metal, rubber, sponge or plastic or a flexible tube covering a mandrel is used as the material of the core. Preferably, the tube is made of nylon, cellophane, rubber, polyester, polyester or polyether ketone. The tube is covered with the mandrel and wound with the fibers, then removed out from mandrel, set in the cavity of the mold and filled with pressure gas.

In the manufacturing method according to the present invention, the reinforcing fibers preformed by winding them around the core by filament winding method is put in the mold. The tube serving as the core of a product to be manufactured is flexed in a required configuration or the solid body serving as the core can be shaped in a desired configuration. In this manner, a product made of fiber-reinforced resin and having a desired configuration such as a curved configuration can be manufactured.

Immersing liquid or a binder which is used to prevent the reinforcing fibers from being untied during the winding thereof around the core does not hinder the polymerization of an unreacted monomer to be used in reaction injection molding.

In particular, since fibers are dipped in liquid, a binder or a mixture thereof, they can be wound around the core at a predetermined position and at a predetermined angle without untying them in filament winding and in addition, they can be easily bent by hand after the liquid is dried. Thus, the fibers can be easily set in the curved cavity of the mold, which eliminates the need for the provision of a jig or a device for winding them in a curved configuration.

Owing to the filament winding method to be adopted in preforming fibers, the mixing ratio between fibers and the distribution of the fibers can be easily controlled. Consequently, the rigidity, elastic modulus, shock resistant performance, vibration absorbing performance, and other functions of the preformed fibers can be freely designed.

Further, the product manufactured according to the present invention can be uniformly reinforced with fibers in the thickness direction thereof from its inner layer to its outer layer. Unlike the conventional method, the method according to the present invention is capable of allowing the outer layer to be composed of a fiber which imparts flatness thereto and a fiber which imparts strength thereto.

### BRIEF DESCRIPTION OF THE DRAWINGS

These and other objects and features of the present invention will become clear from the following description taken in conjunction with the preferred embodiments thereof with reference to the accompanying drawings, in which:
Figs. 1A through 1E are schematic views showing a manufacturing process according to a first embodiment through a third embodiment of the present invention, respectively;
Fig. 2 is a perspective view showing a mold and a layup to be set in the mold according to a fourth embodiment of the present invention;
Figs. 3A and 3B are schematic views showing a manufacturing process according to a fifth embodiment of the present invention, respectively;
Figs. 4A through 4C are schematic views showing a manufacturing process according to a sixth embodiment of the present invention, respectively;
Figs. 5A through 5C are schematic views showing a modification of a core;
Fig. 6 is a sectional view showing a product made of fiber-reinforced resin according to the present invention;
Fig. 7 is a schematic view showing filament winding method according to the present invention;
Fig. 8 is a schematic view showing a state in which reinforcing fiber shaped by the filament winding is set in a mold;
Fig. 9 is a schematic view showing a state in which a conventional reinforcing fiber made of braids is wound around a mandrel; and
Fig. 10 is a sectional view showing a product, made of fiber-reinforced resin, showing a problem of the conventional art.

### DETAILED DESCRIPTION OF THE INVENTION

Before the description of the present invention proceeds, it is to be noted that like parts are designated by like reference numerals throughout the accompanying drawings.

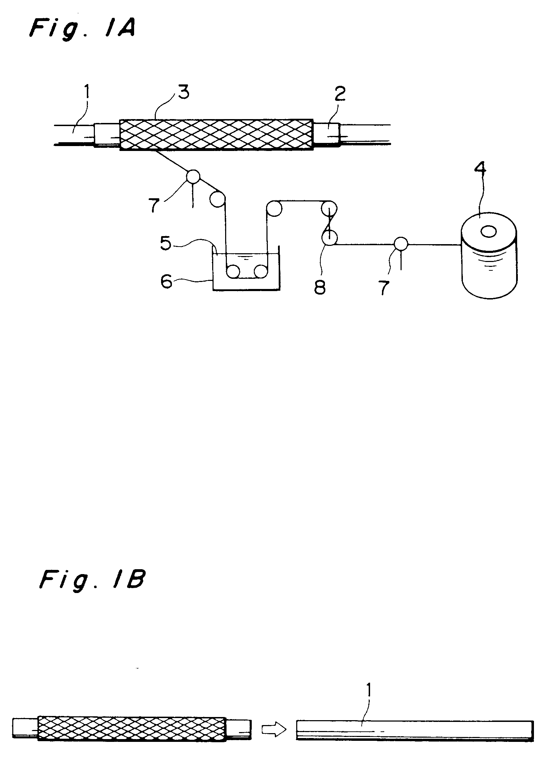

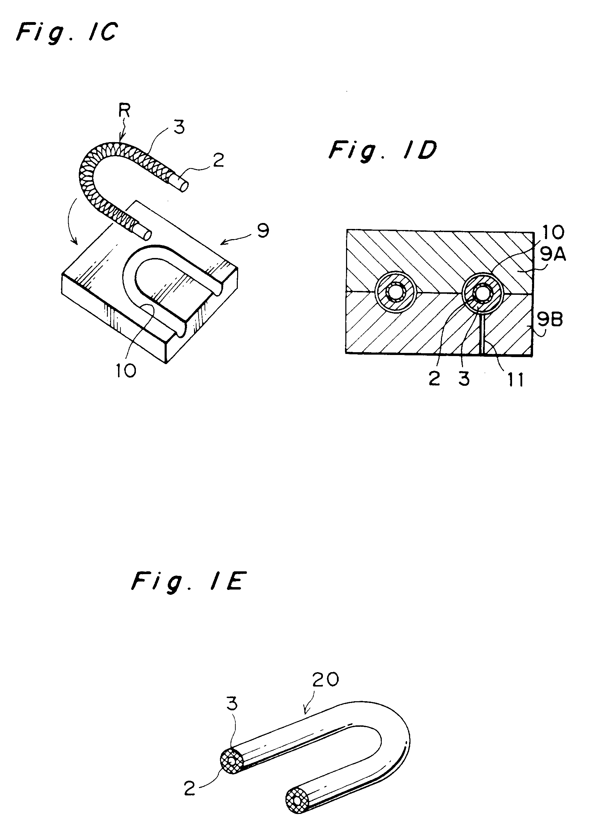

A method for manufacturing a product made of fiber-reinforced resin according to a first embodiment through a third embodiment of the present invention comprises the processes shown in Fig. 1.

That is, as shown in Fig. 1A, an apparatus for manufacturing the product made of fiber-reinforced resin comprises a mandrel 1 and a core consisting of a flexible tube 2 covering the mandrel 1.

The mandrel 1 is rotated and linearly reciprocated by a driving means (not shown) in the axial direction thereof similarly to a known filament winding (FW) machine. It is possible to rotate and linearly reciprocate the fiber-winding side without driving the mandrel 1.

Required fiber 3 is unrolled from a roll 4 and introduced into a container 6 storing alcohol solution 5 containing alcohol-soluble nylon via an eye 7 and a tension roll 8 so as to dip the fiber 3 in the alcohol solution 5 and then, wound around the peripheral surface of the tube 2.

After the fiber 3 is wound around the 2 in a predetermined amount to preform the fiber 3, a layup (R) consisting of the tube 2 and the fiber 3 is removed from the mandrel 1 as shown in Fig. 1B. The fiber 3 impregnated with alcohol-soluble nylon is not hardened unlike a conventional fiber and the alcohol-soluble nylon can be easily bent after it is dried. Therefore, the layup (R) can be bent.

As shown in Fig. 1C, the layup (R) is bent by hand in conformity with a U-shaped cavity 10 of a mold 9 so as to set the layup (R) in the cavity 10. Then, gas is injected into the tube 2.

As shown in Fig. 1D, an upper die 9A of the mold 9 and a lower die 9B thereof are brought into contact with each other to clamp the mold 9. In this state, an unreacted solution of resin is charged into the cavity 10 from an opening 11 so that polymerization occurs in the mold 9.

After the solution of the resin is hardened in several minutes, the mold 9 is opened and a U-shaped product 20 having a configuration of a U-shaped pipe and made of fiber-reinforced resin as shown in Fig. 1E is taken out from the mold 9.

In the first embodiment carried out by the above-described processes, the mandrel 1 made of SUS in a configuration of a straight pipe and having a diameter of 14mm is inserted into the tube 2 made of 66 nylon having an inner diameter of 15.3mm, and glass paper (EPM 4025 manufactured by Japan Byreen Co., Ltd.) is then wound spirally around the tube 2 at an angle of 60° with respect to the axial direction of the mandrel 1 by filament winding method.

A carbon fiber roving (HTA-7-12000 manufactured by Toray Co., Ltd.) is dipped in methanol solution containing 0.5% of alcohol-soluble nylon (AQ nylon K80 manufactured by Toray Co., Ltd.) and then wound over the glass paper at an angle of 20° with respect to the axial direction of the mandrel 1 by filament winding method. Tension of 200g is applied to the carbon fiber roving.

Another glass paper is spirally wound on the carbon fiber roving at an angle of 60°.

In this manner, the layup (R) consisting of the glass paper, the carbon fiber roving, and the glass paper laminated with each other in this order is manufactured.

Then the layup (R) comprising of the tube 2, glass paper and carbon fiber roving is removed from the mandrel 1. Then, the layup (R) is set in the U-shaped cavity 10 of the mold 9 having a diameter of 18.5mm and a radius of curvature of 9.1cm.

The layup (R) can be easily bent in the cavity 10 in accordance with the configuration of the cavity 10 because the layup (R) is not impregnated with unhardened resin.

The mold is heated to 150°C with the pressure in the cavity 10 reduced by a vacuum pump, and RIM nylon UX-21 manufactured by Ube Kosan Co., Ltd. is injected into the cavity 10 while the tube 2 with pressure gas is applied to the interior thereof. Then, a product by means of reaction injection molding (RIM) is molded.

More specifically, a required amount of RIM nylon is put into two containers. One container contained polymerizing catalyzer and nylon and the other container contained polymerization initiator, an activity adjusting agent, and nylon so as to prepare two kinds of stabilized reaction solutions. These two reaction solutions are instantaneously mixed with each other by a mixing head of a two-solution reaction injection molding device, and the mixed solution is immediately injected into the cavity 10 of the mold 9, with the result that a polymerization reaction occurred for one to five minutes while the layup (R) is being pregnated with the mixed solution. As a result, the mixed solution is hardened.

Thereafter, the product is taken out from the mold 9.

As a result, a U-shaped pipe made of fiber-reinforced resin reinforced with the layup (R) consisting of the glass paper and the carbon fiber wound around the tube 2 by filament winding method and the nylon serving as matrix resin is obtained.

In the second embodiment of the present invention, cyclopentadiene (METTON manufactured by Teijin Herculess Co., Ltd.) is used as the resin to be injected into the mold in which reaction injection molding is carried out.

Since the reinforcing fibers wound by filament winding method and the process of molding them by using the mold having the U-shaped cavity are the same as those of the first embodiment, the description thereof is omitted herein.

In the third embodiment, plain weave tape, having a width of 30mm, made of carbon fiber is used as the fiber to be wound, by filament winding method, around the tube 2 at an angle of 45° with respect to the axial direction of the mandrel 1 to form a layup (R).

Except that the kind of the fiber to be wound by filament winding method is varied, the molding process is the same as that of the first embodiment. Therefore the description thereof is omitted herein.

In a fourth embodiment, a layup (R) is formed by the processes as shown in Figs. 1A and 1B similarly to the first embodiment, and the layup (R) is then set in a tennis racket-shaped cavity 10 of the mold 9. That is, the layup (R) is bent to be in a circular arc configuration and straight portions thereof are made to be adjacent to each other to form the shaft of the tennis racket.

Since the subsequent processes are the same as those of the first embodiment, the description thereof is omitted herein.

Since the reinforcing fiber consisting of the glass paper and the carbon fiber laid up by the filament winding method is used and nylon was used as matrix resin, a tennis racket superior in shock absorbing performance and vibration damping performance can be manufactured.

In a fifth embodiment, cylindrical urethane foam having a diameter of 20mm is used as a core 2' and a carbon fiber roving dipped in soluble nylon is wound around the core 2' at an angle of 20° with respect to the axial direction thereof by a method similar to that shown in Fig. 1A to form a layup (R).

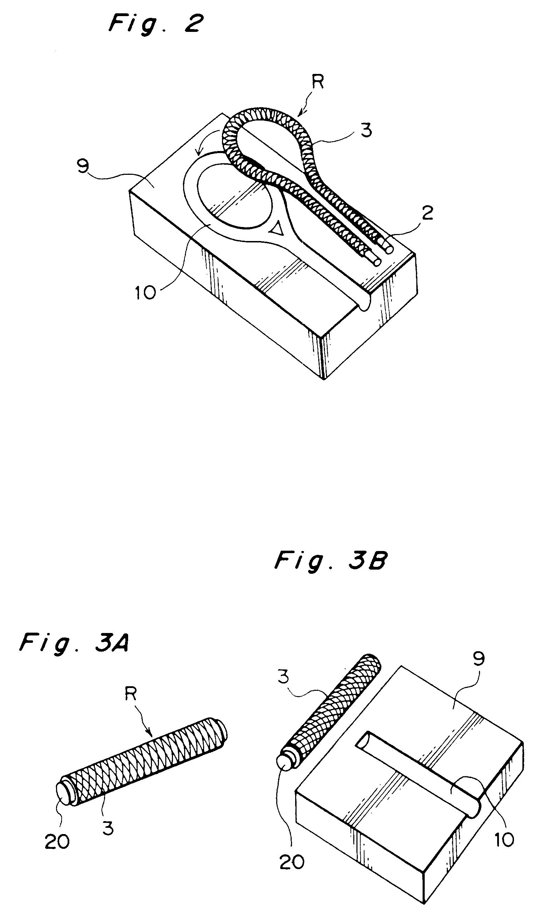

The layup (R) is set in the cylindrical cavity 10 of the mold 9 as shown in Fig. 3B.

Since the subsequent process are similar to those of the fist embodiment, the description thereof is omitted herein.

The above product has a core which is cylindrical and solid and made of the urethane foam and disposed in the center thereof, the carbon fiber roving laminated on the periphery of the urethan foam, and the RIM nylon serving as matrix resin.

In a sixth embodiment, a flat lauan plate 2'' of 13mm x 68mm is used as a core. A carbon fiber roving dipped in soluble nylon is wound around the lauan plate 2'' by filament winding method similarly to the method as shown in Fig. 1A to form a layup (R). The lauan plate 2'' is symmetrical with respect to the rotational axis (L) and therefore no problems occurred in filament winding.

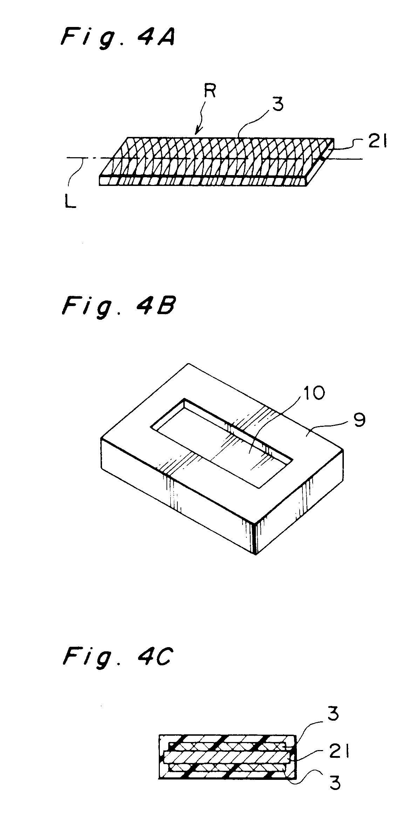

The layup (R) consisting of the lauan plate 2'' and the carbon fiber roving wound over the core 2'' is set in the flat cavity 10 of the mold 9 as shown in Fig. 4B.

Since the subsequent process are similar to those of the fist embodiment, the description thereof is omitted herein.

The product of the sixth embodiment is flat and comprised of the lauan plate 2'' serving as the core of the layup (R) and disposed in the center thereof, and the fiber-reinforced resin layer, adhered to the lauan plate 2'', consisting of the carbon fiber roving 3 wound on the core 2'' and the nylon serving as matrix resin.

In a seventh embodiment, the fiber to be wound around the core is dipped in a solution containing ethanol instead of soluble nylon. That is, the fiber unrolled from a bobbin is introduced into the container 6 storing a solution consisting of ethanol via the eye 7 and the tension roll 8, and then wound around the tube 2 covering the mandrel 1.

More specifically, the carbon fiber roving HTA-12K-N00 manufactured by Toho Rayon Co., Ltd. is wound around the tube 2, covering the metal mandrel having a diameter of 16mm, at an angle of 38° with respect to the axial direction of the mandrel 1.

Since the fiber is dipped in ethanol, the fiber is not frayed at the eye 7 and not untied even after the fiber is on the tube 2 because it is wet with ethanol.

After the fiber winding operation terminates, the tube 2 around which fiber has been wound is removed from the mandrel 1 to form a layup (R) which is set in the cylindrical cavity 10 of the mold 9 similar to that shown in Fig. 3B. Nylon RIM UX21 manufactured by Ube Kosan Co., Ltd is injected into the cavity 10 as matrix resin. As a result of reaction injection molding, a straight cylindrical pipe having an outer diameter of 18.5mm and a thickness of 1.5mm is formed.

In a eighth embodiment, fiber TA-3K-N00 manufactured by Toho Rayon Co., Ltd unrolled from a bobbin is introduced into the container 6 storing a solution comprising methanol containing 0.5 wt% of AQ nylon K80 manufactured by Toray Co., Ltd. via the eye 7 and the tension roll 8. Then, the fiber is wound around the tube 2 covering the same mandrel 1 as that of the seventh embodiment.

Except that the kind of the liquid to dip the fiber is varied, the molding process is the same as that of the seventh embodiment. Therefore, the description thereof is omitted herein.

Since the fiber wound around the tube 2 is wet with methanol, the fiber is not untied. After methanol evaporated, the alcohol-soluble nylon kept binding the fibers with each other. Therefore, the fibers are not untied.

In a ninth embodiment, except that glass roving GLASSRON T-30 manufactured by Asahi Fiberglass Co., Ltd. is used as the fiber, the other conditions are the same as those of the seventh embodiment. Therefore, the description thereof is omitted herein.

Since the glass roving unrolled from the bobbin is dipped in methanol, the glass roving is not frayed at the eye 7. Since the fiber wound around the tube 2 is wet with ethanol, fibers are not untied.

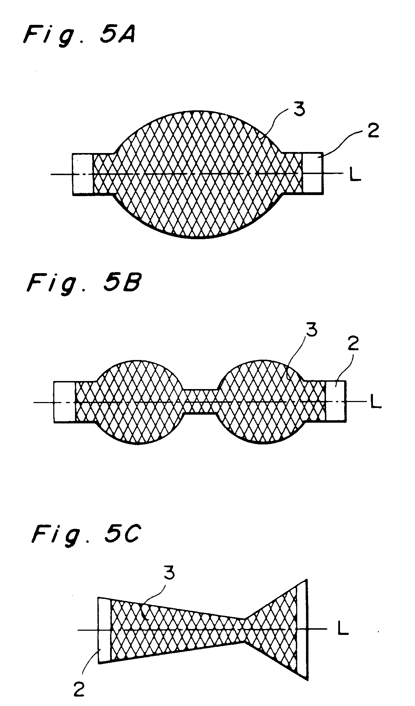

When a solid body is used as the core of a product manufactured by the method according to the present invention, it is unnecessary to consider the removal of the mandrel 1 from the tube 2 after filament winding method is carried out. Thus, it is possible to form the core in complicated configurations as shown in Figs. 5A, 5B, and 5C. If the core is symmetrical with respect to the rotational axis thereof, filament winding can be easily performed.

The solid body can be made of not only an elastic body but also of a rigid body provided that the solid body conforms to the configuration of the cavity of the mold. In addition, a product consisting of fiber-reinforced resin and various kind of materials can be shaped into varied configurations by changing the material of the solid body.

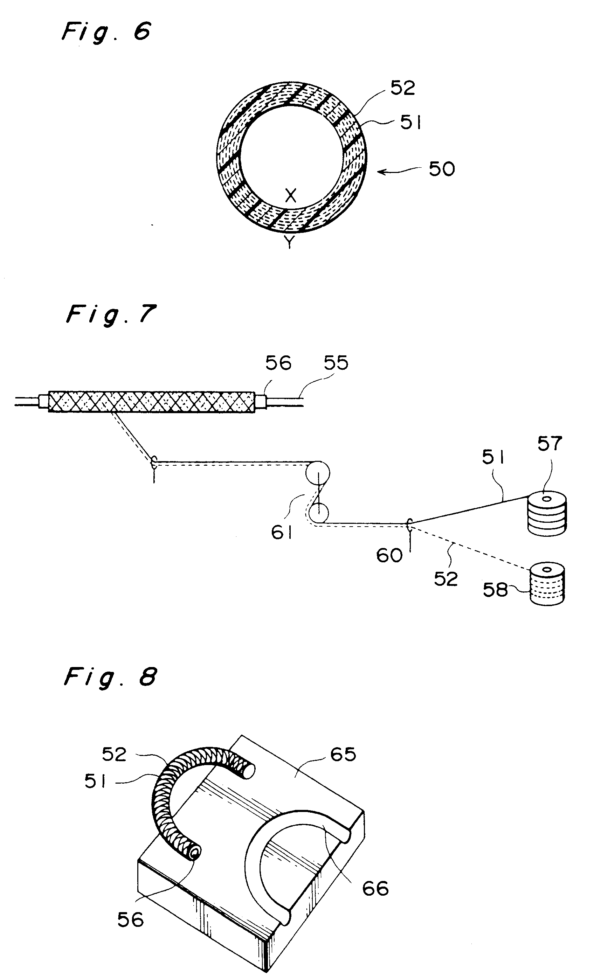

Fig. 6 shows a product 50 made of fiber-reinforced resin comprising two or more kinds of continuous fibers according to a tenth embodiment. The product comprises a carbon fiber 51, a glass fiber 52, and matrix resin consisting of nylon obtained by reaction injection molding. The carbon fiber 51 and the glass fiber 52 consisting of a fiber preformed by filament winding method, respectively are uniformly mixed with each other from an inner layer (X) to an outer layer (Y). Thus, the product 50 has a uniform strength in the thickness direction thereof.

The method for manufacturing the product 50 made of fiber-reinforced resin is described below.

That is, as shown in Fig. 7, a mandrel 55 (made of SUS and having a diameter of 1.5mm) is inserted into a flexible tube 56 (made of nylon and having a width of 24mm) serving as the core. The carbon fiber 51 and the glass fiber 52 are unrolled from a carbon fiber roving 57 (TA-7-12000 manufactured by Toho Rayon Co., Ltd.) and a glass fiber roving 58 (manufactured by Nittobo Co., Ltd.) held by a roller, respectively are wound around the tube 56. Thus, the carbon fiber 51 and the glass fiber 52 are preformed by filament winding method.

The mandrel 55 is rotated and linearly reciprocated by a driving means (not shown) in the axial direction thereof similarly to a known filament winding (FW) machine. It is possible to rotate and linearly reciprocate the fiber-winding side without driving the mandrel 55.

The carbon fiber 51 and the glass fiber 52 unrolled from the carbon fiber roving 57 and the glass fiber roving 58, respectively are dipped in an alcohol solution containing alcohol-soluble nylon. Then, the carbon fiber 51 and the glass fiber 52 pass through an eye 60 to tie them, are then stranded via a tension roll 61, and then wound in a desired number of layers around the peripheral surface of a flexible tube 56 in the direction from an end thereof toward the other end thereof with the tension roll 61 reciprocating.

The carbon fiber 51 and the glass fiber 52 are uniformly mixed with each other both in the thickness direction from an inner layer toward an outer layer of a layup (R) and in the axial direction of the mandrel 55.

After the layup (R) is preformed in a predetermined thickness or layers, the layup (R) comprising the tube 56 and fiber 51,52 is removed out from the mandrel 55. Then, the layup (R) is set in the U-shaped cavity 66 of a mold 65 in accordance with the configuration of the cavity 66. The interior of the tube 56 is filled with pressure air.

Then, the mold 65 is clamped and heated to 150°C with the pressure in the cavity reduced by a vacuum pump, and RIM nylon UX-21 manufactured by Ube Kosan Co., Ltd. is injected into the cavity 66 to form a product by means of reaction injection molding (RIM.)

As a result, a U-shaped pipe made of fiber-reinforced resin reinforced with the layup (R) consisting of the glass paper and the carbon fiber wound around the tube 56 by filament winding method and nylon serving as matrix resin is obtained.

The number of the carbon fiber rovings 57 may be increased to two so as to make the winding amount of the carbon fiber two times as many as that of the glass fiber.

In addition to the carbon fiber roving 57 and the glass fiber roving 58, one more fiber roving may be provided to preform a layup (R) consisting of three kinds of fibers mixed with each other.

It is also possible to use a fiber roving consisting of many kinds of yarns to facilitate the mixture of a plural kind of yarns.

It is possible to use a fiber roving on which a plurality of fibers are mixedly spun so as to feed a plurality of kinds of fibers therefrom for filament winding.

Instead of the simultaneous feeding of a plurality of kinds of fibers from a plurality of rovings to carry out filament winding, it is possible to feed a kind of fiber from a roving and then a different kind of fiber from other roving. In order to dispose a plurality of kinds of fibers in the same layer, the fiber to be wound later is interposed between fibers previously wound.

### Experiment 1

The flexure elastic moduli between a product made of the fiber-reinforced resin manufactured by filament winding method according to the present invention and a product made according to the conventional method were compared with each other.

The straight portions were cut off a product of a first embodiment of the present invention and the conventional product (comparison example).

The size of the test pieces were 18.5mm in outer diameter, 1.5mm in thickness, and 42cm in length. The test pieces were held in a length of 30cm. Four-point flexure test was conducted at points 5cm rightward and leftward from the center of the test piece-holding portion by curving them at a speed of 25mm/minute. The result is as shown below in Table 1.

**Table 1**

| | bending elastic modulus kgf/mm² | fiber-containing percentage vf(%) |
|---|---|---|
| embodiment | 5330 | 60 to 65 |
| comparison example | 5270 | 55 to 65 |

As shown in Table 1, the elastic modulus of the test piece according to the present invention was not different so much from that of the comparison example. The fiber-containing percentage of the former calculated on the basis of specific gravity was not different so much from that of the comparison example, either.

### Experiment 2

The degree of entanglement and untying of the fiber according to the seventh embodiment unrolled from a bobbin and immersed in the immersing liquid was compared with those of a conventional fiber unrolled from a bobbin not immersed in immersing liquid.

As the fiber of the comparison example, filament winding of carbon fiber roving HTA-12K-N00 manufactured by Toho Rayon Co., Ltd. was used and wound around a core similarly to the seventh embodiment except that the roving unrolled from a bobbin was not immersed in ethanol.

Since the roving of the comparison example had no sizing, fibers ware entangled to a great extent at an eye and thus cut often during filament winding. In addition, the arrangement of fibers became disordered because the binding strength among fibers was weak.

The same test pieces as those of the seventh embodiment and the comparison example of the experiment 1 were prepared to evaluate the bending characteristic by conducting four-point flexure test in the same condition.

The result is as shown below in Table 2.

**Table 2**

| | bending elastic modulus kgf/mm² | bending strength kgf(mm²) | number of pieces |
|---|---|---|---|
| embodiment 7 | 2400 to 2670 | 26.0 to 29.3 | 3 |
| comparison example | 1960 to 2550 | 15.0 to 21.5 | 3 |

As shown in Table 2, the strength of fibers of the comparison example was lower than that of the embodiment 7 because the cutting and entanglement occurred in the former. The physical property of the former was not ununiform because the arrangement of the fibers thereof was not in order whereas the bending elastic modulus and the bending strength of the test pieces of the seventh embodiment were higher than those of the comparison example and the physical property was more uniform than that of the comparison example.

Although not described in experiment 2, the test pieces of the embodiments 8 and 9 showed similar physical properties to those of the embodiment 7.

As apparent from the foregoing description, according to the manufacturing method of the present invention, fiber preformed by winding them around the core by filament winding method is set in the mold so as to carry out reaction injection molding. In this manner, a product made of fiber-reinforced resin has a desired configuration such as a curved configuration in addition to a straight cylindrical configuration.

Further, the filament winding method allows a plural kind of fibers to be wound around the core at a desired angle and in a desired quantity.

In addition, since the configuration of the core is set so that the rotational axis of the core is linear, it is unnecessary to provide a large shaft or a device having a complicated mechanism conventionally needed in winding the fibers around the core in a curved configuration by filament winding method.

Furthermore, according to the method of the present invention, fibers unrolled from a roll or a bobbin are dipped in water, an organic solvent or a mixture thereof before they are wound around the core via the eye. Therefore, the fibers are not frayed due to friction among them at the eye and they are not loosened or untied while they are being wound around the core because they are wet and thus they can be wound around the core at an angle as designed.

In particular, the dipping liquid does not hinder the polymerization of an unreacted monomer during reaction injection molding and it is possible to mold the fibers preformed by filament winding method into a product made fiber-reinforced resin with RIM resin acting as matrix resin.

Since the reinforcing fibers laid up by filament winding method is molded in the cavity of the mold, it is possible to select various kinds of matrix resins and in particular, RIM nylon or cylcopentadiene having a favorable permeability into the laid-up fibers and a favorable shock resistant performance, vibration absorbing performance, and heat-resistant performance may be used as the matrix resin.

Further, the reinforcing fiber is shaped by filament winding method. Therefore, in designing the rigidity, elastic modulus, shock resistant performance, vibration absorbing performance, weight, thickness and other functions of the preformed fibers, the mixing ratio between different kinds of fibers is controlled based on the amount of fiber per length which is calculated by checking the amount of fiber rolled on the roving or the number of fiber rovings.

Furthermore, all kinds of mixed fibers can be distributed uniformly in the thickness direction of a product. Thus, the product is strong throughout each layer. Needless to say, any desired portion can be made to be strong or weak.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A method for manufacturing a product made of fiberreinforced resin of a required configuration comprising the steps of:
dipping fibers (3) such as roving or yarn into water, an organic solvent or a mixture thereof;
winding said fibers (3) monofilament around a core (1,2) to preform said fibers (3) by filament winding method;
setting said core (1, 2) and said preformed fibers (3) integral with each other in a cavity (10) of a mold (9);
injecting an unreacted solution of resin serving as matrix resin into said cavity (10); and
carrying out reaction injection molding.

2. A method as defined in claim 1, wherein said fibers (3) to be wound around said core (1, 2) by filament winding method consists of two or more kinds of fibers.

3. A method as defined in claim 1, wherein resin to be used in reaction injection molding consists of RIM nylon, cyclopentadiene or epoxy.

4. A method as defined in claim 1, wherein said core (1, 2) consists of a tube (2) which covers a mandrel (1); is removed from said mandrel (1) after said fibers are wound around said core (1, 2); is set in a reaction injection molding mold (9) together with said fibers (3); and the interior of said tube (2) is fulled with pressure gas.

5. A method as defined in claim 1, wherein said core (1, 2) consists of a solid body (20) and set in said reaction injection molding mold together with said fibers (3).

6. A method as defined in claim 4, wherein said tube (2) is flexible.

7. A method as defined in claim 1, wherein said reinforcing fibers (3) are dipped in water, an organic solvent or a mixture thereof before said reinforcing fibers (3) are wound around said core (1, 2) by filament winding method.

8. A method as defined in claim 1, wherein said organic solvent is selected from among methanol, carbon tetrachloride, chloroform, hexane, cyclohexane, benzene, toluene, 1, 2-dichloroethane, isopropanol, tetrahydrofuran, 1, 4-dioxane, acetone, methyl ethyl ketone, diethyl ether, methanol, and ethanol.

## Patentansprüche

1. Verfahren zur Herstellung eines Produkts aus faserverstärktem Harz in einer gewünschten Bauform mit den Schritten:
Eintauchen von Fasern (3), wie etwa Vorgarn oder Garn, in Wasser, eine organische Lösung oder eine Mischungen davon;
Aufwickeln der Fasern (3) einfädig um einen Kern (1, 2), um die Fasern (3) mittels eines Fadenwicklungsverfahren vorzuformen;
Einsetzen des Kerns (1, 2) und der vorgeformten Fasern (3), die einstückig miteinander sind, in einen Leerraum (10) einer Form (9);
Einspritzen einer unreagierten Lösung aus Harz, das als Matrixharz dient, in den Leerraum (10); und
Durchführen eines Reaktionseinspritzgußverfahrens.

2. Verfahren nach Anspruch 1,
bei dem die durch das Präzisionswicklungsverfahren um den Kern (1, 2) zu wickelnden Fasern (3) aus zwei oder mehreren Faserarten bestehen.

3. Verfahren nach Anspruch 1,
bei dem Reaktionseinspritzgußverfahren vervendete Harz aus RIM-Nylon, Zyklopentatdien oder Epoxy besteht.

4. Verfahren nach Anspruch 1,
bei dem der Kern (1, 2) aus einem einen Formkern (1) bedeckenden Rohr (2) besteht, wobei der Formkern (1) entfernt wird, nachdem die Fasern um den Kern (1, 2) gewickelt sind; zusammen mit den Fasern (3) in die Reaktionseinspritzgußform (9) eingesetzt wird, und wobei das Innere des Rohrs (2) mit einem Druckgas gefüllt wird.

5. Verfahren nach Anspruch 1,
bei dem der Kern (1, 2) aus einem festen Körper (20) besteht und in die Reaktionseinspritzgußform zusammen mit den Fasern (3) eingesetzt wird.

6. Verfahren nach Anspruch 4,
bei dem das Rohr (2) flexibel ist.

7. Verfahren nach Anspruch 1,
bei dem die Verstärkungsfasern (3) in Wasser, eine organische Lösung oder eine Mischungen davon getaucht werden, bevor die verstärkenden Fasern (3) um den Kern (1, 2) mittels des Fadenwicklungsverfahrens gewickelt werden.

8. Verfahren nach Anspruch 1,
bei dem die organische Lösung ausgewählt wird aus Methanol, Carbon-tetrachlorid, Chloroform, Hexan, Zyklohexan, Benzol, Tolluol, (1, 2)-Dichlorethan, Isopropanol, Tetrahydrofuran, (1, 4)-Dioxan, Aceton, Methylethylketon, Diethylether, Methanol und Ethanol.

## Revendications

1. Procédé de fabrication d'un produit constitué de résine renforcée par des fibres d'une configuration exigée comprenant les étapes consistant :
- à immerger des fibres (3), telles qu'une mèche ou un fil, dans de l'eau, un solvant organique ou un mélange de ceux-ci;
- à enrouler lesdites fibres (3) en monofilament autour d'un noyau (1, 2) pour préformer lesdites fibres (3) par un procédé d'enroulement filamentaire ;
- à fixer ledit noyau (1, 2) et lesdites fibres préformées (3) en un seul bloc l'un avec les autres dans une cavité (10) d'un moule (9) ;
- à injecter une solution n'ayant pas réagi de résine servant de résine de matrice dans ladite cavité (10) ; et
- à réaliser une réaction et un moulage par injection.

2. Procédé selon la revendication 1, dans lequel lesdites fibres (3) à enrouler autour dudit noyau (1, 2) par un procédé d'enroulement filamentaire consistent en deux ou plusieurs types de fibres.

3. Procédé selon la revendication 1, dans lequel la résine à utiliser dans la réaction et le moulage par injection consiste en du Nylon, du cyclopentadiène ou de l'époxy RIM (réaction et moulage par injection).

4. Procédé selon la revendication 1, dans lequel ledit noyau (1, 2) consiste en un tube (2) qui couvre un mandrin (1) ; est retiré dudit mandrin (1) après que lesdites fibres sont enroulées autour dudit noyau (1, 2) ; est fixé dans un moule de réaction et de moulage par injection (9) avec lesdites fibres (3) ; et l'intérieur dudit tube (2) est rempli de gaz comprimé.

5. Procédé selon la revendication 1, dans lequel ledit noyau (1, 2) consiste en un corps solide (20) et est fixé dans ledit moule de réaction et de moulage par injection avec lesdites fibres (3).

6. Procédé selon la revendication 4, dans lequel ledit tube (2) est flexible.

7. Procédé selon la revendication 1, dans lequel lesdites fibres de renforcement (3) sont immergées dans de l'eau, un solvant organique ou un mélange de ceux-ci avant que lesdites fibres de renforcement (3) soient enroulées autour dudit noyau 1, 2 par un procédé d'enroulement filamentaire.

8. Procédé selon la revendication 1, dans lequel ledit solvant organique est choisi parmi le méthanol, le tétrachlorure de carbone, le chloroforme, l'hexane, le cyclohexane, le benzène, le toluène, le 1, 2-dichloroéthane, l'isopropanol, le tétrahydrofurane, le 1, 4-dioxane, l'acétone, la méthyléthylcétone, le diéthyléther, le méthanol et l'éthanol.
